# EUROPEAN PATENT APPLICATION

(11) **EP 4 080 449 A1**
(43) Date of publication of application: **26.10.2022**
(21) Application number: 21169285.0
(22) Date of filing: 20.04.2021
(51) Int. Cl.: G06T 7/00, G06T 7/10

(54) **MEDICAL IMAGE QUALITY ASSESSMENT**

(71) Applicant: Koninklijke Philips N.V., 5656 AG Eindhoven (NL)
(72) Inventor: GOOßEN, André, 5656 AE Eindhoven (NL); WAECHTER-STEHLE, Irina, 5656 AE Eindhoven (NL); PETERS, Jochen, 5656 AE Eindhoven (NL); LOSSAU, Tanja, 5656 AE Eindhoven (NL); WILD, Sebastian, 5656 AE Eindhoven (NL); EWALD, Arne, 5656 AE Eindhoven (NL); GROTH, Alexandra, 5656 AE Eindhoven (NL); WEBER, Frank Michael, 5656 AE Eindhoven (NL)
(74) Representative: Philips Intellectual Property & Standards

(57) **Abstract**

A method comprising applying to an image frame a segmentation operation and extracting one or more features or properties of an anatomical structure represented in the image frame. Quality indicators are derived based on analysis both of the segmentation and the extracted features of the anatomical structure. User feedback is generated based on the quality indicator scores.

## Description

### FIELD OF THE INVENTION

The present invention relates to quality assessment of medical image data.

### BACKGROUND OF THE INVENTION

It is known to use segmentation to derive quantifications of structural features and physiological parameters relating to anatomical bodies. For instance, in the field of cardiac ultrasound, it is possible to quantify volumes and dimensions of heart chambers, arteries, valves and other features of the heart, as well as hemodynamic parameters such as cardiac output.

The model-based segmentation (MBS) can only be applied to structures visible in an image with sufficient clarity. The reliability of measurements derived from MBS depends on the available information in the image and on the quality of the segmentation. Less skilled sonographers may acquire poor images. It would be desirable to enable even less skilled sonographers to acquire images to which MBS can be applied.

### SUMMARY OF THE INVENTION

The invention is defined by the claims.

To facilitate the above objective, it would be advantageous to provide feedback at the stage of image acquisition regarding predicted reliability or confidence of subsequent MBS quantifications if applied to an acquired image frame. It is known to derive retrospective reliability or confidence scores for segmentation results, after they have been generated. However, at this stage it is not possible to adjust image acquisition to improve the quality of the images and of the resulting segmentation. It would be desirable to provide users guidance which can warn of insufficient image quality and optionally may provide guidance for improving quality.

According to examples in accordance with an aspect of the invention, there is provided a computer-implemented method, comprising: receiving from a medical imaging apparatus a medical image frame of an anatomical structure; applying a model-based segmentation algorithm to the medical image frame to derive a segmentation result; extracting from the acquired image one or more features of the anatomical structure; deriving a score for one or more quality indicators, based on application of a quality assessment to the segmentation result and to the extracted one or more features of the anatomical structure; generating feedback information for output to a user interface, the feedback information being based on the one or more quality indicator scores.

Each quality indicator may optionally be configured to be predictive of reliability of quantifications derived from a subsequent model-based segmentation procedure. Each quality indicator may be correlated with this reliability.

By providing the quality indicator checks, preferably in real time with image acquisition, this allows an operator to adjust the relevant image acquisition parameter to improve the quality score, and thereby improve reliability of subsequent segmentation results.

By deriving the quality indicators based on both the segmentation and features of the image itself, this improves effectiveness of the assessment. Assessments of the segmentation may include for instance anatomical plausibility, consistency between image frames, contour support and missing or interpolated pieces of information. Assessments of the image may include assessment of one or more of: the field of view (FOV) size, FOV orientation, FOV position, and a check of the particular anatomy detectable within the FOV.

By applying the quality assessment to extracted features of the anatomy, the quality assessment of the image relates to analysis of the visible features of the anatomy in the image, rather than only generalized properties of the image itself.

The quality assessment may in some examples be realized by an artificial intelligence algorithm, e.g. a machine learning or deep learning algorithm.

The quality assessment may comprise two stages: a first stage in which the quality indicators are derived, and a second stage in which, for quality indicator scores which are below a pre-defined threshold, determining an acquisition parameter correlated or associated with the quality indicator, i.e. an acquisition parameter which is a cause of a low score.

The anatomical structure may be the heart, or a portion of the heart.

The imaging apparatus may be an ultrasound imaging apparatus, so that the received images are ultrasound images.

In some embodiments, the method may comprise receiving a sequence of image frames, and wherein the steps of the method are performed in real time for each received image frame of the sequence.

In this way, real-time feedback can be provided to the imaging operator, enabling them to adjust the acquisition parameter and improve image quality.

In other words, the method comprises receiving a series of ultrasound image frames over an imaging period, and the steps of the method are performed for each image frame in turn. The image frames are received sequentially, one at a time.

In some embodiments, the method may comprise generating a display output for causing a user interface to display in real time each received image frame and wherein the method further comprises controlling the user interface to output the feedback for a given frame during display of the relevant frame.

This allows an imaging operator to view all information on one screen: the live stream of the medical image frames, in combination with the quality feedback.

In some embodiments, the quality indicators may include one or more of: an area coverage of the field of view (FOV); temporal stability of the image; a rotation/orientation of the FOV; and a position of the FOV relative to the anatomical structure.

Area coverage may mean a size of the field of view, or may mean an area or section of anatomy that is covered by the FOV.

Additionally or alternatively, the quality indicators may include one or more of: a score indicative of a correspondence between shapes or outlines in the segmentation result and shapes or outlines present in the image frame; and/or a score indicative of a correspondence between a mesh geometry in the segmentation result and a known geometry of a pre-defined anatomical object of interest. The known geometry is typically referred to as a shape prior.

Additionally or alternatively, in accordance with one or more embodiments, the method may comprise receiving a temporal sequence of image frames, and wherein the quality indicators include a score indicative of a consistency or correspondence between:
a result of the segmentation for at least one image of the image sequence occurring within a first phase of a movement cycle of the anatomical object; and
a result of the segmentation for a further at least one image of the image sequence occurring in a further phase of said movement cycle of the anatomical object.

This may be referred to as segmentation consistency score.

In some embodiments, the method may further comprise determining, for each of at least a subset of the quality indicator scores, at least one acquisition parameter of the medical imaging apparatus with which the quality indicator score is correlated.

This means identifying an acquisition parameter on which the quality indicator score is dependent, i.e. an acquisition parameter for which adjustment of the acquisition parameter causes adjustment of the quality indicator score.

In some embodiments, the method may comprise identifying a subset of the quality indicator scores which fall below respective pre-defined thresholds, and determining at least one correlated acquisition parameter of the medical imaging apparatus for each of said identified subset.

This information may be output as part of the feedback.

Each acquisition parameter may be a manually adjustable acquisition parameter. In some examples, the acquisition parameters include a pose and/or positioning of the probe relative to the anatomical structure.

In some examples, the feedback information may comprise a representation of the derived scores for the one or more quality indicators. Additionally or alternatively, the feedback information may comprise guidance for a user for improving the one or more scores. For example, in some embodiments, the method may comprise deriving guidance for a user for modifying at least one acquisition parameter of the medical imaging apparatus, the guidance for improving at least one of the one or more quality indicator scores.

In this set of embodiments, the feedback comprises user guidance for improving image quality. This for example comprises instructions for how to alter one or more particular acquisition parameters to which the quality indicator score corresponds.

The guidance information may comprise visual guidance for display on a user interface.

In some embodiments, the guidance may be generated using an AI algorithm, e.g. a machine learning or deep learning algorithm.

In some embodiments, the AI algorithm may be a machine learning algorithm which has been trained based on training data entries comprising prior images of the anatomical structure from one or more subjects, each image being tagged with one or more quality indicator scores.

In further examples, the prior images may be tagged with reliability or confidence scores indicative of reliability or confidence of results of a model based segmentation applied to the respective image.

In some embodiments, the at least one acquisition parameter may include a positioning and/or pose of an imaging probe relative to the anatomical structure, and the guidance comprises instructions for changing the positioning and/or pose of the imaging probe.

For example the guidance may be instructions for translating or rotating the probe relative to the subject's body.

The instructions may additionally or alternatively be for changing a handling or movement pattern of the probe, e.g. if the quality indicators suggest unsteady transducer movement or shaking during acquisition of imaging data.

In some embodiments, the method may comprise generating a display output for causing a user interface device to display the received image frame, and wherein the guidance is overlaid on the displayed image frame.

For example, the guidance may be displayed in real time with receipt of each image frame to give real time feedback to the operator.

The guidance may comprise one or more linguistic messages.

The linguistic messages may be visually presented in the form of a written message, or acoustically presented for example.

The guidance may be generated using a natural language AI engine.

In some embodiments, the method may further comprise a secondary phase comprising applying a second model-based segmentation to the received image to derive measurements for one or more parameters or properties relating to the anatomical structure, and wherein the one or more quality indicators are configured to be correlated with a reliability metric of measurements derived using the second model-based segmentation.

In other words, the particular quality indicators that are provided are adapted to be predictive of a reliability or confidence metric pertaining to the quantifications obtained using the second model-based segmentation. Thus, the quality indicators are proxy measures of reliability of the second model based segmentation.

Examples in accordance with a further aspect of the invention provide a computer program product comprising code means configured, when executed on a processor, to cause the processor to perform a method in accordance with any example or embodiment outlined above or described below, or in accordance with any claim of this application.

Examples in accordance with a further aspect of the invention provide a processing arrangement comprising: an input/output; and one or more processors.

The one or more processors are adapted to: receive at the input/output from a medical imaging apparatus a medical image frame of an anatomical structure; apply a model-based segmentation algorithm to the medical image frame to derive a segmentation result; extract from the acquired image one or more features of the anatomical structure; derive a score for one or more quality indicators, based on application of a quality assessment to the segmentation result and to the extracted one or more features of the anatomical structure; and generate feedback information for output to a user interface, the feedback information being based on the one or more quality indicator scores.

Examples in accordance with a further aspect of the invention provide a system comprising: a processing arrangement in accordance with any example or embodiment outlined above or described below, or in accordance with any claim of this application; and a medical imaging apparatus operatively coupled with the processing arrangement for acquiring one or more medical image frames.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 outlines steps of an example method in accordance with one or more embodiments;
Figs. 2-5 illustrate example display outputs of a user interface providing feedback information;
Fig. 6 illustrates an example neural network for mapping quality indicators to feedback information; and
Fig. 7 shows components of an example system comprising a processing arrangement in accordance with one or more embodiments;

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a means for assessing, optionally in real time, the quality of obtained medical images with respect to subsequent processing of the images, e.g. for segmentation. This is based on assessing one or more pre-determined quality indicators that are for instance known to be correlated with reliability of a resulting segmentation. The method is based on applying to an image a preliminary segmentation procedure as well as extracting one or more features or properties of an anatomical structure. The quality indicators are derived based on analysis both of the segmentation and the extracted features of the anatomical structure. This ensures that the quality indicators are able to take account of relevant quality predictors pertaining to segmentation, as well as properties of the image and of the anatomical content of the image. This allows a user to take corrective action while image acquisition is still ongoing to improve the quality of the images with respect to the subsequent imaging processing task.

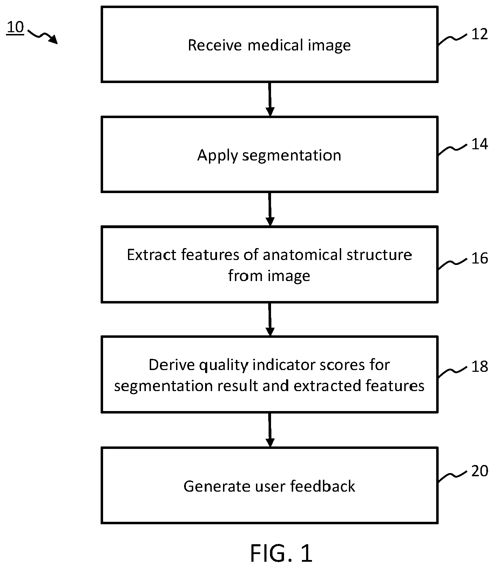

Fig. 1 outlines steps of an example method in accordance with one or more embodiments. The method may be implemented by a computer or a processor. The method comprises receiving 12 from a medical imaging apparatus 42 a medical image frame of an anatomical structure. In some embodiments, the method may comprise receiving a temporal sequence of image frames, and wherein the subsequent steps of the method are performed in real time for each received image frame. In some embodiments, the images may be received from a datastore instead of from an imaging apparatus. Optionally, the medical imaging apparatus may be an ultrasound imaging apparatus. Optionally, the anatomical structure may be the heart, or a portion of the heart.

The method further comprises applying 14 a model-based segmentation algorithm (MBS-1) to the medical image frame to derive a segmentation result. The segmentation algorithm may be retrieved from a datastore and executed by one or more processors. The segmentation result may comprise outlines of one or more features of the anatomical structure and/or dimensions of one or more features of the anatomical structure.

The method further comprises extracting 16 from the acquired image one or more features of the anatomical structure. Extracting may mean at least detecting the anatomical features ('present'/'not present'). It may further mean isolating the section of the image frame containing the anatomical features, or noting a co-ordinate position of an area containing the features within an image frame, to permit further analysis. The features may be structural features, such as sub-portions of the anatomical structure. For example, in the case of the heart, these features may include one or both ventricles, one or more cardiac valves, and one or more cardiac arteries.

The method further comprises deriving 18 a score for one or more quality indicators, based on application of a quality assessment to the segmentation result and to the extracted one or more features of the anatomical structure. The quality assessment may be an operation, program or algorithm which is applied to the segmentation result and to the features of the anatomical structure. It may be a program comprising a plurality of quality assessment operations, processes or algorithms. It may be retrieved from a datastore and executed by one or more processors.

The method further comprises generating 20 feedback information for output to a user interface 44, the feedback information being based on the one or more quality indicator scores. In some examples, the feedback information may comprise a representation of the derived scores for the one or more quality indicators. Additionally or alternatively, the feedback information may comprise guidance for a user for improving the one or more scores.

With regards to the quality assessment, this may comprise one or more image analysis algorithms adapted to check one or more criteria. The algorithms may include machine learning algorithms which have been trained to output a classification result indicative of at least one quality indicator, where this may be a binary result, or a quantitative result which can take any of a plurality of values. The algorithms may additionally or alternatively include one or more regression analysis algorithms or decision tree algorithms.

The quality indicators checked by the quality assessment algorithms include at least one quality indicator relating to at least sections of the image containing the one or more extracted features, and at least one quality indicator relating to a property of the segmentation result. The quality indicators may relate to local and/or global properties or features of each of the image and the segmentation.

For example, the quality indicators may include one or more field of view (FOV) indicators, e.g. an angle, direction, rotation or size of the field of view. For example, one quality indicator may relate to whether or not the FOV is large enough to contain the whole anatomical structure within the acquired image frame. These may each be a binary indicator per criterion. Another quality indicator may be indicative of whether or not a particular feature of the anatomical structure is fully present in the image frame. Another quality indicator may relate to a quality (e.g. noise level) of at least a section of the image frame containing an extracted feature of the anatomical structure.

One or more of the quality indicators may take values along a gradual scale, for instance which reflects a degree of conformity with a criterion, e.g. a percentage score. In some cases, the quality indicators may be scores which reflect a deviation index from an optimum criterion, e.g. a deviation angle or deviation distance or size of a field of view.

With regards to quality indicators for the image, these may in some cases relate to one or more of: acquisition geometry, and temporal stability. The quality indicators may include analysis of image areas and/or anatomical feature contours for support, strength of support, and missing or interpolated pieces of information. The quality indicators may relate to a position and/or orientation of the anatomical structure, or features thereof, for example with respect to a field of view of the medical imaging apparatus.

By way of one example, in the case of an ultrasound imaging apparatus being used to image the heart, the ultrasound field of view has a conical frustum shape. For trans-thoracic echocardiography for example, the heart's apex is expected to be close to the narrower end of the frustum, with its beam angle permitting capture of all the relevant chambers (e.g. left/right ventricles and/or left/right atria). Too narrow an angle may lead to cropped anatomy or wall drop-out. Furthermore, a wrongly tilted beam field of view - even when covering all relevant anatomy - may also be detrimental to image quality.

One or more quality indicators may relate to properties of a received sequence or series of image frames, e.g. whether the whole of a pre-defined phase of a movement cycle of the anatomical structure is captured by a sequence of image frames. For example, a quality indicator may assess whether the whole of a particular phase of the cardiac cycle is captured.

With regards to the quality indicators for the segmentation, these may include one or more of: a shape plausibility metric, a temporal consistency metric between frames, and a visual confidence metric. These will each be explained further below.

In one or more embodiments, the quality indicators may include a score indicative of a correspondence between shapes or outlines in the segmentation result and shapes or outlines present in the image frame. This may be referred to as a visual confidence score or metric.

The visual confidence score effectively represents the extent to which the segmentation result is supported by evidence from the image. The model based segmentation algorithm may employ use of a prior anatomical model, and thus a generated segmentation result may in some cases derive largely from shape interpolation, with only limited image support. In this latter case, large parts of the segmentation are based only on prior heart shape information. The visual confidence score aims to assess the extent of visual or graphical correspondence between the shapes, outlines or geometry of the segmentation and the shapes, outlines or geometry of the underlying image(s) upon which it is based.

In some examples, the visual confidence score may be derived for a given image frame using a machine learning algorithm. The machine learning algorithm may be derived in advance using a supervised training procedure. This may comprise training the algorithms using a set of training data comprising example image frames, each having been manually labelled with a visual correspondence score. The visual correspondence score can be derived based on applying the relevant image segmentation procedure to the image frames of the training dataset in advance, with a user then manually assessing the visual correspondence between shapes and outlines of the segmentation and the image frames. Once the scores are manually derived for each training image frame, and the training data tagged, optionally the image frames of the training dataset may be analyzed to identify image features that correlate with the quality indicator scores (e.g. local distribution of target point distances). The machine learning algorithm may be configured to specifically analyze these features when generating the predicted score for an input image series.

Additionally or alternatively, the quality indicators may include a score indicative of a correspondence between a mesh geometry in the segmentation result and a known geometry of the anatomical structure of interest. This score may be referred to as a mesh plausibility score. The known geometry may be a typical geometry of the anatomical structure.

This score effectively represents the extent to which the resulting segmentation is anatomically plausible. For example, if the anatomical structure of interest (i.e. the anatomical object being segmented) is the whole or a portion of the heart, prior knowledge of the geometry of the whole or the relevant portion of the heart can be used to assess the extent to which a generated mesh maps geometrically onto the geometry which is expected.

In some examples, the mesh plausibility score may be derived for a given image frame using a machine learning algorithm. The machine learning algorithm may be trained using a set of training data comprising a plurality of example image frames, each having been manually labelled with a mesh plausibility score. The mesh plausibility score can be derived by applying the relevant image segmentation procedure to each image frame in the training dataset in advance, with a user then manually assessing the correspondence between the mesh(es) derived from the segmentation and a known or expected geometry for the relevant anatomical object based on clinical knowledge as to the expected anatomy shape.

Additionally or alternatively, in accordance with one or more embodiments, the method may comprise receiving a temporal sequence of image frames, and wherein the quality indicators include a score indicative of a consistency or correspondence between:
a result of the segmentation for at least one image of the image sequence occurring within a first phase of a movement cycle of the anatomical object; and
a result of the segmentation for a further at least one image of the image sequence occurring in a further phase of said movement cycle of the anatomical object.

The first phase can be a phase at any point in the movement cycle (i.e. it does not need to be a chronological starting phase of the cycle).

This quality indicator score may be referred to as segmentation consistency. By way of example, the segmentation procedure may be for segmenting the heart. The segmentation consistency may relate to a consistency between the segmentation results derived in the end diastolic (ED) and end systolic (ES) phases respectively. This may result in one score per image sequence.

Each of the above quality indicators may be represented by a numerical value within a pre-defined range of possible values. One or more of the quality indicators may instead take a binary value, for example true/false, or pass/fail. For instance, a binary value might be used for the segmentation consistency score, and optionally numerical values for the other scores.

Based on the obtained quality indicator scores, feedback information is derived for output to a user.

In some example, the feedback information comprises guidance for a user for modifying at least one acquisition parameter of the medical imaging apparatus, the guidance for improving at least one of the one or more quality indicator scores. The acquisition parameters are preferably manually adjustable acquisition parameters, such as a positioning, orientation angle, movement pattern, or handling of an imaging probe, such as an ultrasound imaging probe. In this way, based on the quality indicators, feedback can be given to a user to change the acquisition to acquire images which will result in better segmentation results during subsequent processing.

Examples of feedback guidance may include guidance for changing a position of the imaging probe relative to the subject body, e.g. changing a location of a transducer face of an ultrasound imaging probe. Further examples may include guidance for changing a rotation or orientation of the probe, e.g. to change a propagation angle of an ultrasound beam relative to the body. Further examples may include guidance for changing a movement pattern or a probe handling characteristic, for instance guidance to hold the probe steadier to avoid shaking and consequent motion artefacts. Further examples may include guidance to hold the probe fixed in position at a particular location for longer, in order to capture the whole of a particular phase of a cyclical motion pattern of an anatomical structure, e.g. the whole of a cardiac cycle.

Additionally or alternatively, guidance may include instructions for manually correcting the segmentation in a specific area. For example, in some cases, even with a perfectly angled and sized FOV, the signal-to-noise ratio (SNR) of acquired imaging data is too low in some areas of an image frame for the segmentation to reliably detect an anatomical contour. For example, the anatomical wall corresponding to the contour may have very low visibility in the image, or there may be multiple gradients at the location of the wall making it difficult to detect with gradient threshold methods. Furthermore, in some cases there may be an unusual anatomical shape for a particular patient which leads to a segmentation error. In such cases, the one or more quality indicator scores may include a score indicative of presence of such errors, e.g. the mesh plausibility score, or an SNR score or another score. It may detect regions of the image which exhibit the relevant error. If there are no means for correcting the errors by changing an acquisition parameter, guidance may be generated for the user providing instruction to manually check and revise the result of the segmentation in the specific detected area, e.g. by adding the contour manually or changing the contour.

To derive the guidance, the method may comprise determining, for each of at least a subset of the quality indicator scores, at least one acquisition parameter of the medical imaging apparatus with which the quality indicator score is correlated. This information may be obtained in some examples from a lookup table which maps each quality indicator to one or more correlated acquisition parameters, i.e. one or more acquisition parameters wherein a change in the parameter causes a change in the associated quality indicator score. In further examples, the correlated acquisition parameter may be obtained using a machine learning algorithm, as will be explained further below.

In some embodiments, the method may comprise identifying a subset of the quality indicators whose scores fall below respective pre-defined thresholds, and subsequently determining at least one correlated acquisition parameter of the medical imaging apparatus for each identifier of said identified subset. Guidance may then be generated for modifying the identified correlated acquisition parameter for each of the subset of quality indicators, in order to improve the relevant quality indicator score.

In some examples, the user guidance may comprise simply an indication of the identified correlated acquisition parameter. In further examples, the guidance comprises one or more instructed changes in the acquisition parameter in order to improve a quality indicator score.

In preferred examples, the guidance comprises one or more linguistic messages, i.e. natural language messages. Guidance in natural language is easier and faster for a user to comprehend, improving response time and accuracy. By way of illustration, examples of natural language messages may include: "Avoid moving the transducer within a heart phase to allow for better end-diastole/end-systole consistency.", or "end-diastole and end-systole frame are inconsistent. Please check the segmentation of the left atrium in both phases."

The generated feedback information is preferably displayed on a display of a user interface device such as in the form of text displayed on a screen or using augmented reality glasses. In other examples, the feedback information may be communicated to a user via a different type of sensory output, e.g. acoustic feedback or haptic feedback.

In some examples, the guidance may be displayed in real time with receipt of each image frame to give real time feedback to the operator.

The method may comprise generating a display output for causing a user interface device to display the received image frame, and wherein the guidance is overlaid on the displayed image frame, and displayed adjacent the received image frame

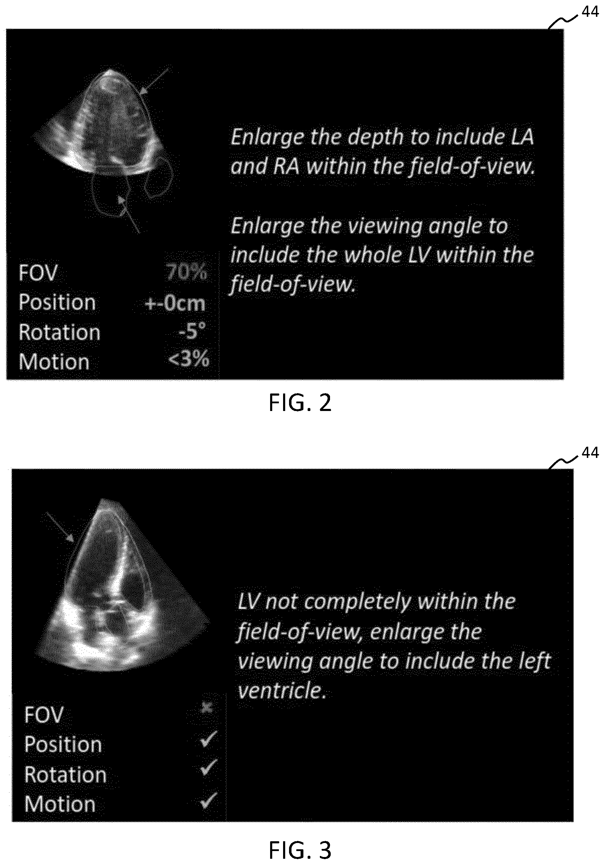

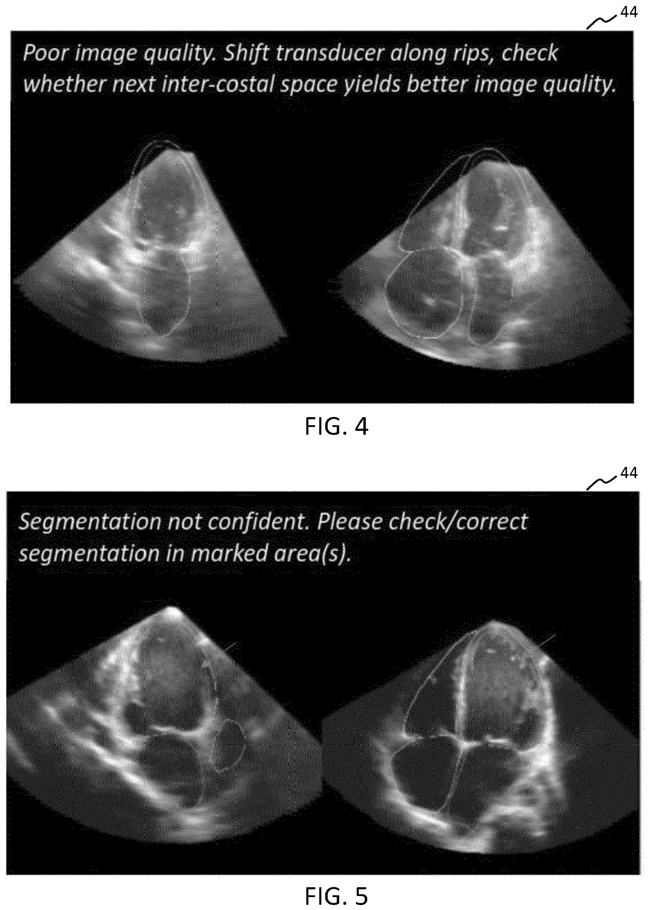

Figs. 2-5 illustrate example display outputs 44 of a user interface in which feedback guidance is displayed on the user interface display in conjunction with the received image frame to which the guidance corresponds. In these examples, the imaged anatomical structure is the heart. Furthermore, in these examples, the guidance is provided in the form of natural language messages giving instructions for changing at least one acquisition parameter in order to improve a quality indicator. Optionally, in addition to displaying the image frame, the segmentation result is also displayed, e.g. the identified outline of the anatomical structure of interest.

As mentioned above, in some examples, the user guidance may be generated using an AI algorithm, and preferably wherein the AI algorithm is a machine learning algorithm which has been trained based on training data entries comprising prior images of the anatomical structure from one or more subjects, each image being tagged with one or more items of guidance indicative of a recommended change to a specified acquisition parameter in order to improve one or more quality indicator scores. The algorithm may receive as input an image frame and provide as an output a recommended acquisition parameter change to improve a quality indicator score. In this case, there may not be any explicit separate step of identifying the correlated acquisition parameter. Instead, this may be implicitly achieved by the processing of the machine learning algorithm. In further examples, the algorithm may receive as an input one or more quality indictor scores and output guidance for modifying one or more acquisition parameters to improve the quality indicator scores.

In some examples, machine learning algorithm may be an artificial neural network.

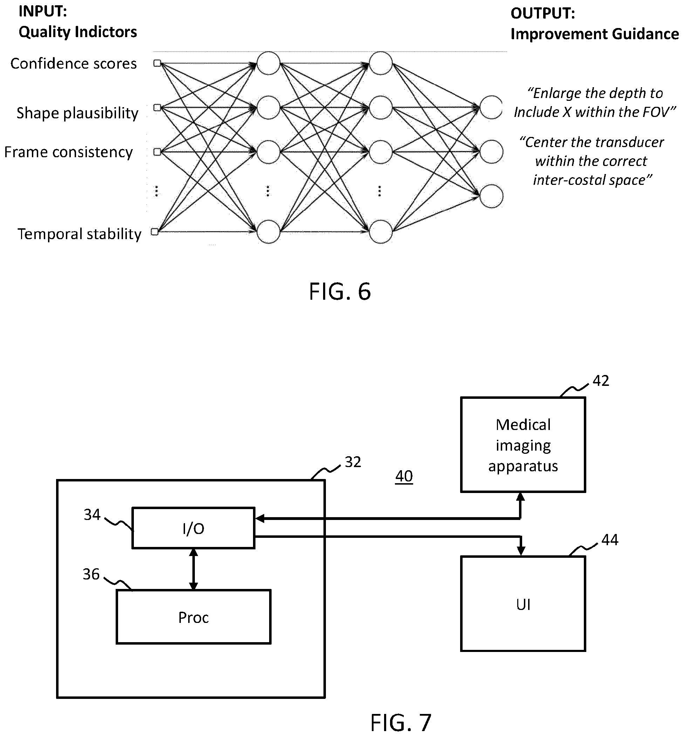

Fig. 6 illustrates an example neural network for mapping quality indicator scores to improvement guidance. During training of the neural network, training data is used comprising images which have been manually rated by experts by selecting potential improvements from a pre-populated list of possible guidance. The network is configured during training to train a classification step and learn all applicable improvements. When the network is applied in operation to a set of quality indicator scores, the network derives guidance probabilities and highly ranked guidance is presented to the user, e.g. prioritized by probability.

Instead of using a neural network, a set of rules may be defined which are used to derive the guidance based on the quality indicator scores.

In some embodiments, the quality assessment is configured such that the quality indicator scores are correlated with, or predictive of, a quality of a subsequent second segmentation procedure (which may be labelled MBS-2) to be applied after the steps of the method outlined above. For example, the method above is performed during acquisition of a series of medical image frames of the anatomical structure, with real-time guidance generated throughout the acquisition. This results in an acquired imaging dataset which may be stored or cached in a local or remote datastore.

Subsequently, method may comprise a secondary phase comprising applying a second model-based segmentation, MBS-2, to the received one or more image frames to derive measurements for one or more parameters or properties relating to the anatomical structure.

The one or more quality indicators may be configured to be correlated with a reliability metric of measurements derived using the second model-based segmentation. This may be achieved for example through the training of a machine learning algorithm used to obtain the quality indicator scores and/or the user guidance.

The second model based segmentation may be a more comprehensive segmentation than the first. For example, a processing resource required to run the first model based segmentation MBS-1 may be less than that required to run the second model based segmentation MBS-2.

As illustrated in Fig. 7, a further aspect of the invention provides a system 40 for use in carrying out a method in accordance with embodiments described above.

The system comprises a processing arrangement 32 comprising: an input/output 34; and one or more processors 36 adapted to:
receive at the input/output from a medical imaging apparatus a medical image frame of an anatomical structure; apply a model-based segmentation algorithm to the medical image frame to derive a segmentation result; extract from the acquired image one or more features of the anatomical structure; derive a score for one or more quality indicators, based on application of a quality assessment to the segmentation result and to the extracted one or more features of the anatomical structure; and generate feedback information for output to a user interface, the feedback information being based on the one or more quality indicator scores.

Optionally the system further comprises a medical imaging apparatus 42 operatively coupled with the processing arrangement for acquiring one or more medical image frames. This may be an ultrasound imaging system for example.

Optionally, the system further comprises a user interface 44 comprising a display for use in displaying the feedback information generated by the processing arrangement 32, optionally in combination with the received ultrasound image frame(s).

One aspect of the invention provides the processing arrangement 32 alone. A further aspect of the invention provides the system comprising the processing arrangement in combination with the medical imaging apparatus 42 and/or the user interface 44.

As discussed above, embodiments of the invention make use of one or more machine-learning algorithms. A machine learning algorithm is any self-training algorithm that processes input data in order to produce or predict output data.

Suitable machine-learning algorithms for being employed in embodiments of the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

Embodiments of the invention described above employ a processing arrangement. The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented. The processing arrangement includes a communication module or input/output for receiving data and outputting data to further components.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method (10), comprising:
receiving (12) from a medical imaging apparatus (42) a medical image frame of an anatomical structure;
applying (14) a model-based segmentation algorithm to the medical image frame to derive a segmentation result;
extracting (16) from the acquired image one or more features of the anatomical structure;
deriving (18) a score for one or more quality indicators, based on application of a quality assessment to the segmentation result and to the extracted one or more features of the anatomical structure;
generating (20) feedback information for output to a user interface (44), the feedback information being based on the one or more quality indicator scores.

2. The method of claim 1, wherein the method comprises receiving a sequence of image frames, and wherein the steps of the method are performed in real time for each received image frame of the sequence.

3. The method of claim 2, wherein the method comprises generating a display output for causing a user interface to display in real time each received image frame and wherein the method further comprises controlling the user interface to output the feedback for a given frame during display of the relevant frame.

4. The method of any of claims 1-3, wherein the quality indicators include one or more of: an area coverage of the field of view, FOV; temporal stability of the image; a rotation/orientation of the FOV; and a position of the FOV relative to the anatomical structure.

5. The method of any of claims 1-4, wherein the quality indicators include one or more of:
a score indicative of a correspondence between shapes or outlines in the segmentation result and shapes or outlines present in the image frame; and/or
a score indicative of a correspondence between a mesh geometry in the segmentation result and a known geometry of a pre-defined anatomical object of interest.

6. The method of any of claims 1-5, wherein the method further comprises determining, for each of at least a subset of the quality indicator scores, at least one acquisition parameter of the medical imaging apparatus with which the quality indicator score is correlated.

7. The method of claim 6, wherein the method comprises identifying a subset of the quality indicator scores which fall below respective pre-defined thresholds, and determining at least one correlated acquisition parameter of the medical imaging apparatus for each of said identified subset.

8. The method of any of claims 1-7, wherein the method comprises deriving guidance for a user for modifying at least one acquisition parameter of the medical imaging apparatus, the guidance for improving at least one of the one or more quality indicator scores.

9. The method of claim 8, wherein the guidance is generated using an AI algorithm, and preferably wherein the AI algorithm is a machine learning algorithm which has been trained based on training data entries comprising prior images of the anatomical structure from one or more subjects, each image being tagged with one or more quality indicator scores.

10. The method of any of claims 8-9, wherein the at least one acquisition parameter includes a positioning and/or pose of an imaging probe relative to the anatomical structure, and the guidance comprises instructions for changing the positioning and/or pose of the imaging probe.

11. The method of any of claims 1-10, wherein the guidance comprises one or more linguistic messages.

12. The method of any of claims 1-11, wherein:
the method further comprises a secondary phase comprising applying a second model-based segmentation to the received image to derive measurements for one or more parameters or properties relating to the anatomical structure, and
the one or more quality indicators are configured to be correlated with a reliability metric of measurements derived using the second model-based segmentation.

13. A computer program product comprising code means configured, when executed on a processor, to cause the processor to perform a method in accordance with any of claims 1-12.

14. A processing arrangement (32) comprising:
an input/output (34); and
one or more processors (36) adapted to:
receive (12) at the input/output from a medical imaging apparatus a medical image frame of an anatomical structure;
apply (14) a model-based segmentation algorithm to the medical image frame to derive a segmentation result;
extract (16) from the acquired image one or more features of the anatomical structure;
derive (18) a score for one or more quality indicators, based on application of a quality assessment to the segmentation result and to the extracted one or more features of the anatomical structure; and
generate (20) feedback information for output to a user interface, the feedback information being based on the one or more quality indicator scores.

15. A system comprising:
a processing arrangement (32) as claimed in claim 14; and
a medical imaging apparatus (42) operatively coupled with the processing arrangement for acquiring one or more medical image frames.
